# EUROPEAN PATENT SPECIFICATION

(11) **EP 2 749 981 B1**
(45) Date of publication and mention of the grant of the patent: **24.02.2021**
(21) Application number: 13199780.1
(22) Date of filing: 30.12.2013
(51) Int. Cl.: G05B 19/042, G05B 19/418, G05B 23/02, G06Q 10/06, G06F 3/0484

(54) **An electronic calibration and measurement device with digital checklist**
Elektronische Kalibrierungs- und Vermessungsvorrichtung mit digitaler Kontrollliste
Dispositif de mesure et d'étalonnage électronique avec liste de contrôle numérique

(30) Priority: 31.12.2012 US 201261747903 P; 15.03.2013 US 201313837888
(43) Date of publication of application: 02.07.2014
(73) Proprietor: Fluke Corporation, Everett, WA 98203 (US)
(72) Inventor: Crepps, Robert, Snohomish, WA 98296 (US); Dyck, David, Lake Forest Park, WA 98155 (US); Mrvaljevic, Nikola, Seattle, WA 98103 (US)
(74) Representative: HGF

(56) References cited:
- US-A1- 2006 087 402
- US-B1- 6 584 421

## Description

### BACKGROUND

In various industrial environments, such as in oil refineries, chemical plants, manufacturing facilities, or other situations or environments where precautions must be taken, a checklist of procedures, measurements, inspections, and other tasks is completed on a regular basis to help ensure safety and optimal operation of equipment. For instance, various regulations (such as ISO 9000, FDA, EPA, OSHA regulations, etc.) may require periodic inspection, calibration, and measurement of devices and equipment, as well as documentation of the inspection, calibrations, measurements, and other tasks. Such tasks, once defined, are often documented in a customized, physical checklist (such as a piece or pad of paper), and the operator must document with a pen or pencil the tasks carried out, the measurements taken, etc. At a later time/date, the checklist data is typically uploaded to a computer database or similar for storage and archival of results.

It can be cumbersome and inefficient to use a piece of paper to outline the tasks and document the tasks. For instance, if an operator needs to inspect a transmitter for condensation, surrounding rust or fraying of wires, etc., it can be difficult to make notes on the checklist while efficiently and safely carrying out the tasks. As another example, an operator may need to go up scaffolding, be lifted on a forklift, etc., where it can be difficult to carry a checklist and pen in addition to any test or calibration equipment. Furthermore, these situations can be further complicated in harsh environments, such in as rain or snow storms.

A device called a documenting process calibrator (DPC), available from Fluke Corporation of Everett, Washington, may be used to calibrate and document calibration steps and calibration results of various equipment and procedures. For instance, DPC's, such as the Fluke 750 series documenting process calibrators, are used to test instruments and equipment in various industrial environments, such as by sourcing, simulating, and measuring pressure, temperature, and electrical signals. The DPC is used to run various calibration procedures on equipment and devices, and it stores the calibration results within the DPC for downloading to a computer at a later date. In this manner, the operator does not need to write down the calibration results or manually transfer the results to an electronic database for storage.

A DPC is typically used in harsh or potentially dangerous industrial environments where it would be difficult to both measure and calibrate equipment and record the results at the same time. The DPC records all test results for which the DPC was used to make the calibration or measurement. However, any additional checklist procedures must be done separately, requiring the operator to carry a physical checklist with him/her, record the results or tasks, and thereafter manually transfer the data onto a computer or similar device. Such a procedure is inefficient and cumbersome for the operator. Thus, there is a need for an improved method for performing checklist procedures in an industrial environment.

Document US2006/087402 discloses a system and method useful for providing quality control services in connection with a project for initiation of a process plant having field devices disposed at respective field sites in the process plant.

### SUMMARY

Embodiments of the invention are set out in the appended claims.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is an exemplary pictorial depiction of a networking environment for carrying out aspects of the present disclosure, wherein the networking environment includes a documenting process calibrator, a host server, and a site server/workstation;
FIGURE 2 is an exemplary pictorial depiction of computer architecture for the host server or the site server/workstation;
FIGURE 3 is an exemplary flow diagram of a method for implementing a digital checklist;
FIGURE 4 is an exemplary graphical user interface of a first portion of a digital checklist;
FIGURE 5 is an exemplary graphical user interface of a second portion of a digital checklist;
FIGURE 6 is an exemplary graphical user interface of a third portion of a digital checklist;
FIGURE 7 is an exemplary graphical user interface of a fourth portion of a digital checklist;
FIGURE 8 is an exemplary graphical user interface of a fifth portion of a digital checklist;
FIGURE 9 is an exemplary graphical user interface of a sixth portion of a digital checklist;
FIGURE 10 is an exemplary graphical user interface of a seventh portion of a digital checklist; and
FIGURE 11 is an exemplary graphical user interface of a seventh portion of a digital checklist.

### DETAILED DESCRIPTION

The present disclosure is directed to a system for a digital checklist used to carry out a list of tasks, and a method for implementing the digital checklist for use in an industrial plant or manufacturing environment. Aspects of the present disclosure will be hereinafter described with reference to a digital checklist implemented on a documenting process calibrator.

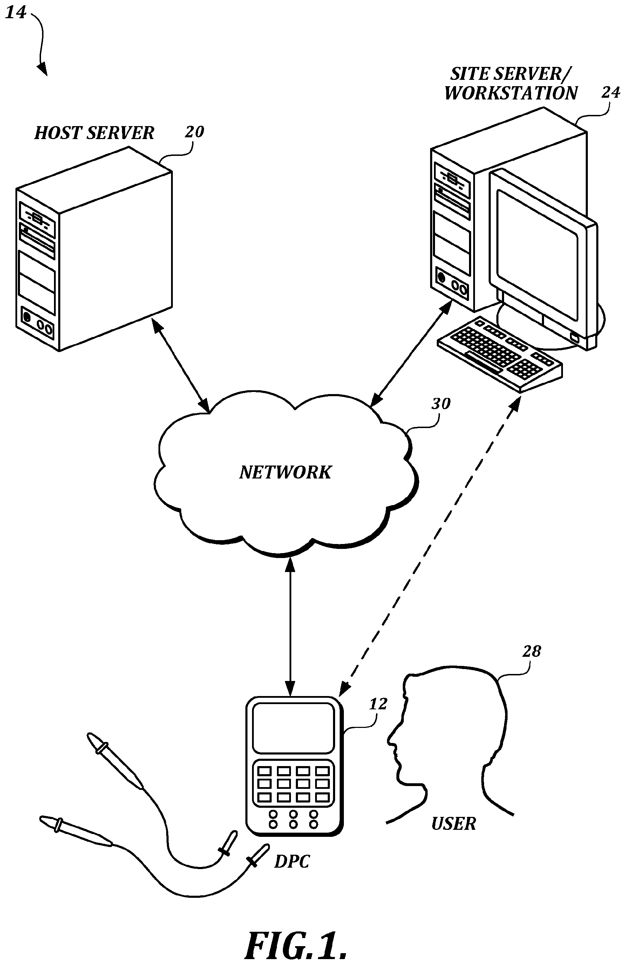

Referring to FIGURE 1, an exemplary pictorial depiction of an electronic calibration and measurement device, such as a documenting process calibrator (DPC) 12, in communication with a networking environment 14 is shown. The DPC 12 is a multifunction device that can be used in harsh or dangerous industrial environments to measure and calibrate various devices, instruments, systems, etc. Any suitable DPC, such as a 750 Series Fluke documenting process calibrator, available from Fluke Corporation of Everett, Washington, may be used. The DPC 12 may be placed into communication with a computer or similar device for uploading checklist tasks and other procedures. Once the digital checklist tasks and results are captured in the DPC 12, the DPC 12 may again be placed into communication with a computer or similar device for downloading the results for storage and archive.

A brief, general description of a networking environment 14 suitable for carrying out aspects of the digital checklist and the method for implementing the digital checklist will now be described.

The networking environment 14 is comprised of a plurality of computers, namely, the host server 20, the site server/workstation 24, and the DPC 12, wherein the DPC 12 is shown associated with a user 28. The host server 20 and the site server/workstation 24 are configured to communicate with each other and with the DPC 12 via a network 30, which may be implemented as a local area network ("LAN"), a wide area network ("WAN"), or the global network commonly known as the Internet. As known to those skilled in the art and others, the computers 20 and 24 and the DPC 12 illustrated in FIGURE 1 may be configured to exchange files, commands, and other types of data over the network 30. However, since protocols for network communication such as TCP/IP are well known to those skilled in the art of computer networks, those protocols will not be described herein.

The functions performed by each of the computers described with reference to FIGURE 1 may instead be implemented by a plurality of computers. For example, while the host server 20 is illustrated as a single computer, single-based functionality is frequently handled in a "server farm" in which multiple servers cooperate in executing necessary tasks so that requests from potentially large numbers of users may be satisfied. Moreover, in addition to the conventional computer systems illustrated in FIGURE 1, those skilled will recognize that the present method may be practiced on other kinds of computers, including laptop computers, tablet computers, personal digital assistants ("PDAs"), or any other suitable device in which computer software or other digital content may be executed.

In the context of FIGURE 1, the host server 20 may be configured to generate and store digital checklist programs and files for upload and use on the DPC 12. The digital checklist programs and files are accessible by uploading programs and/or files from the host server 20, by accessing programs/files through a shared library, or through a Web-based program accessible on the site server/workstation 24.

The site server/workstation 24 includes suitable programs for accessing the digital checklist programs and files from the host server 20 over the network 30. An operator may access the digital checklist program/file on the site server/workstation 24 to retrieve, modify, and/or build customized digital checklist programs and files for downloading onto the DPC 12. It should be appreciated that the digital checklist programs and files may instead be stored locally on the site server/workstation 24 as well as any modified or customized digital checklist programs, for uploading and use on the DPC 12.

The DPC 12 includes suitable hardware and firmware for uploading the digital checklist programs and files onto the DPC 12. The DPC 12 may be placed into communication with the site server/workstation 24 though a serial or RS 232 port, a USB connection, or other wired means, through a wireless connection, or by other suitable means.

The DPC 12 also includes suitable hardware and firmware for running the digital checklist programs and files on the DPC 12, and thereafter uploading the completed/modified digital checklist file onto the site server/workstation 24 for archive and storage. The completed digital checklist file may either be stored locally on the site server/workstation 24, or instead stored on the host server 20.

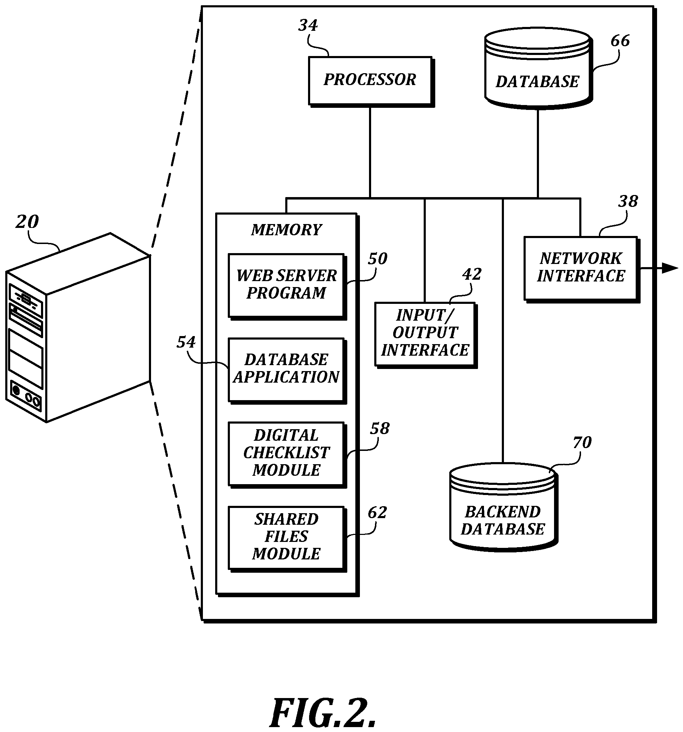

Referring to FIGURE 2, an exemplary architecture of the host server 20 depicted in FIGURE 1 that illustrates computer components suitable to implement aspects of the present method will be described. Those skilled in the art and others will recognize that the host server 20 illustrated in FIGURE 1 may be any one of a variety of devices, including, but not limited to, personal computing devices, server-based computing devices, mini and mainframe computers, laptops, or other electronic devices having some type of memory. In the embodiment illustrated in FIGURE 2, the host server 20 includes a processor 34 in communication with a variety of computing elements, including a network interface 38, an input/output interface 42, and a memory 46.

The network interface 38 depicted in FIGURE 2 enables the host server 20 to communicate data, control signals, requests, and other information via a communication network (LAN, WAN, Internet, etc.) such as the network 30 described above with respect to FIGURE 1. For instance, the host server 20 may receive requests from other networked computers and transmit data back to a requesting computer using the network interface 38.

The input/output interface 42 enables the host server 20 to communicate with various local input and output devices. An input device in communication with the input/output interface 42 may include computing elements that provide input signals to the host server 20, such as a keyboard, mouse, external memory, disc drive, etc. Also, an output device in communication with the input/output interface 42 may include computing elements that accept output signals such as a monitor, a printer, and the like.

The processor 34 is configured to operate in accordance with computer program instructions stored in a memory, such as the memory 46. In some computing systems, program instructions may also be embodied in a hardware format, such as a programmed digital signal processor. In any event, as illustrated in FIGURE 2, the memory 46 stores a Web server program 50, a database application 54, a digital checklist module 58, and a shared files module 62.

The Web server program 50 illustrated in FIGURE 2 comprises computer-executable instructions that, when executed by the processor 34, generates configurable markup documents (hereinafter referred to as "Web pages"). The Web server program 50 provides a way for the host server 20 to interact with users of other network-accessible computers. For example, the Web server program 50 is configured to generate Web pages and cause markup code form Web pages to be accessible from the network 30. When a Web page is accessed, the Web server program 50 may receive data back from a network computer that describes the user's interactions with the Web page. In accordance with one embodiment of the presently disclosed method, the content of the Web pages generated by the Web server program 50 serve as an interface that enables users to create, modify, and access digital checklist programs for downloading onto the DPC 12. Moreover, the content of the Web pages generated by the Web server program 50 serve as an interface that enable users to upload data to a database 66, and access any stored data within the database 66 and/or a back end database 70.

The Web server program 50 also interacts with other computer components illustrated in FIGURE 2 so that the appropriate data may be obtained from or communicated to a user. For example, a request to create a customized digital checklist file may be received form a user. In this instance, data associated with the request is received at the Web server program 50 and it is forwarded to the digital checklist module 58 so that the digital checklist module 58 may be run to create a customized digital checklist file.

In another instance, a request to upload a completed digital checklist file from the DPC 12 (through the site server/workstation 24) may be received from a user. In such an example, data associated with the request is received at the Web server program 50 and forwarded to the database application 54 so that the database 66 may be updated. In that regard, when a request to retrieve completed checklist data or a customized checklist file is received from a user, the data associated with the request is received at the Web server program 50 and forwarded to the database application 54 so that the database 66 may retrieve the data or file. As can be appreciated from the foregoing, the database application 54 provides mechanisms for updating and/or retrieving data stored in the database 66 such that a user may retrieve or upload data associated with a corresponding digital checklist file through a digital checklist Web site. The database application 54 may also be suitable for authenticating the user and/or electronic signature such that archived data may only be retrieved by authorized personnel.

The Web server program 50 may also interact with the database application 54 to retrieve data from a back end database 70 that stores data necessary to provide Web pages for enabling users to create and access digital checklist programs and files, for enabling users to upload data from completed digital checklist files, and for enabling users to retrieve data from previously stored completed digital checklist files. It should be appreciated that the database 66 and back end database 70 may instead be combined into one database, or instead, additional databases may be used.

In addition or as an alternative to the Web server program 50, a shared files module 62 may be included for providing remote access to the digital checklist programs and files created by the digital checklist module. The shared files module 62 could be configured as a Dynamic Link Library (DLL) or any other suitable configuration to provide an interface on the site/server workstation 34 for downloading and retrieving files on the DPC 12.

As noted above, the digital checklist programs and files may alternatively be stored locally on the site server/workstation 24. In that regard, the site server/workstation 24 may communicate directly with the DPC 12 through wired or wireless means without the use of a network. In this alternative embodiment, the site server/workstation 24 may include computer components similar to those of the host server 20 described above with respect to FIGURE 2. For instance, the digital checklist module 58 would be stored locally on the site server/workstation 24 for creating customized digital checklist files, accessing created digital checklist files, modifying digital checklist files, etc. Moreover, the database application 54 would be configured to store and retrieve digital checklist data locally in the database 66 and/or the backend database 70.

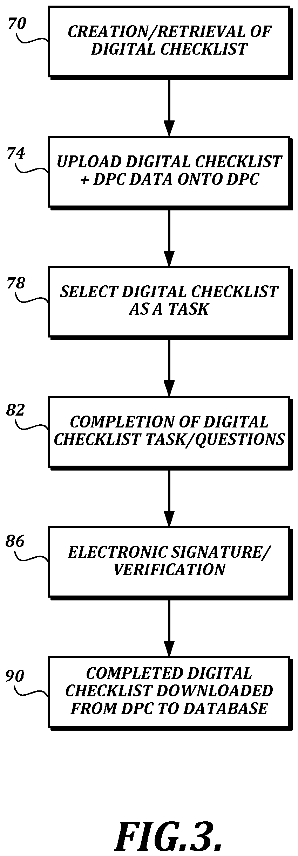

Referring to FIGURE 3, the digital checklist used to carry out a list of tasks, and the method for implementing the digital checklist will now be described. The compilation of digital checklist programs, files, etc. (hereinafter collectively referred to as the "digital checklist") are created by the digital checklist module 58, as indicated by block 70, which may be configured to include one or more template checklists that can be customized for the intended use. A user accesses the digital checklist module 58 through the site server/workstation 24 by interfacing the Web server program 50 or the shared files module 62 (or directly on the site server/workstation 24 if the digital checklist module 58 is installed locally). With the use of the digital checklist module 58, a customized digital checklist having a unique series of prompts, questions, tasks, etc., (hereinafter collectively referred to as the "prompts") is created. The digital checklist module 58 is similarly used to modify a digital checklist template or retrieve an earlier created digital checklist.

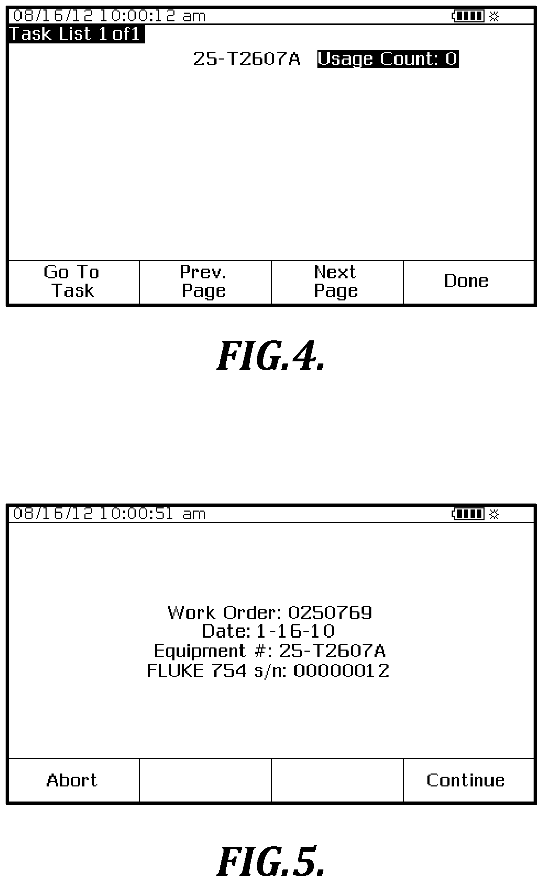

The digital checklist module 58 may access the database 66 to retrieve stored information about the DPC 12 on which the digital checklist will be executed. Such information may include information for the DPC 12 ("DPC data"), such as, for instance, the DPC input/output range for one or more measurements, the test tolerance, tag and serial number, procedure information and details, past calibration and test results, etc. The DPC data may be pulled from the database 66 to assist in populating certain information, questions and tasks in the checklist. For instance, referring to FIGURE 5, when selecting the checklist to perform on the DPC 12, the checklist may list the serial number and model of the DPC, any precautionary notes, a summary of past results, etc.

Once the digital checklist has been created, modified, or retrieved, the selected digital checklist is uploaded onto the DPC 12 from the site server/workstation 24, as indicated by block 74. The digital checklist populates the DPC 12 with a plurality of prompts that need to be viewed by or completed by the user.

Once uploaded onto the DPC 12, the digital checklist is selectable as a prompt, as indicated by block 78, and as shown in FIGURE 4. The DPC 12 may include any suitable graphical user interface ("GUI") for displaying the checklist and its associated prompts, such as the exemplary GUI shown in FIGURES 4-11. The GUI may display the prompts with suitable control devices, such as buttons, drop down lists, check lists, radio buttons, etc. The DPC 12 may also include a suitable input assembly for inputting information through one of the control devices displayed on the GUI. For instance, the input assembly may include a keyboard for entering information, a touchscreen, voice command technology, or any other suitable technology now known or later developed. After the digital checklist is selected, the checklist prompts are viewed by and/or completed by the user, as indicated by block 82. Although each digital checklist may be unique and configured for use in a specific situation, prompts of an exemplary digital checklist will now be described with reference to FIGURES 4-11.

Referring to FIGURE 4, the user may power on the DPC 12 and access the appropriate menu for selecting the digital checklist to be carried out on the DPC 12. The desired digital checklist may be selected either from a list of checklists or as the sole option. The selection may be made in any suitable manner. For instance, the checklist may be selected by highlighting the checklist and then highlighting "OK" or "Next Page" to continue onto the digital checklist tasks.

Referring to FIGURE 5, upon selection of the desired digital checklist, the DPC 12 may display information about the DPC being used, such as the model and serial number. The DPC 12 may further display the digital checklist reference or work number, the date the checklist is being performed, the equipment to be tested, and any other pertinent information relevant to the user. Upon viewing this information, the user can proceed to the next screen by clicking or highlighting "Continue" or "OK."

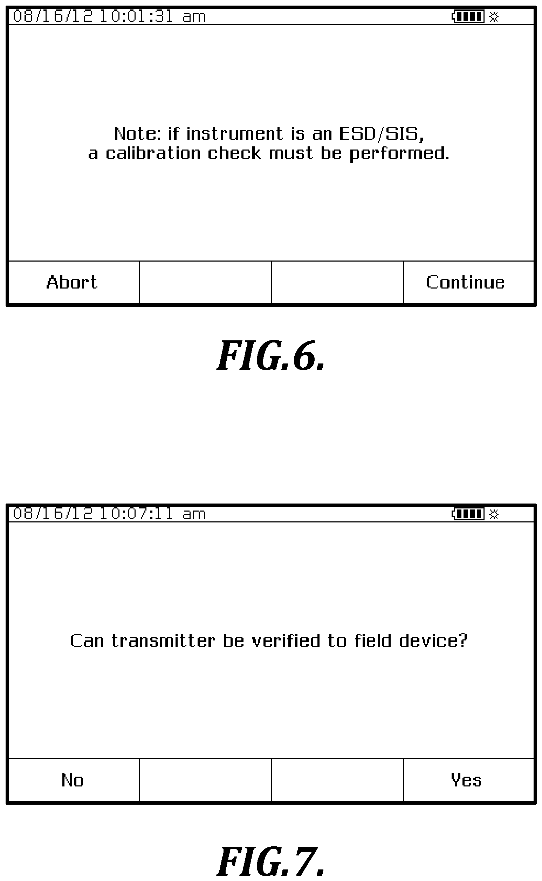

Referring to FIGURE 6, any notes, alerts, or precautions regarding the tasks to be performed may be displayed. For instance, certain precautionary calibration steps may need to be performed on certain equipment, and if so, the checklist may need to be aborted to first complete these tasks. To abort the checklist, the user can click or highlight "Abort." If the precautionary note can be disregarded, the user can proceed to the next screen by highlighting "Continue" or "OK." It should be appreciated that the user may exit the digital checklist for completion at a later time or date by clicking "Abort" at any time.

Referring to FIGURE 7, the DPC 12 may prompt the user to answer a question by selecting one or more of a plurality of answers, such as by selecting either "Yes" or "No." Upon selecting an answer, the DPC 12 will display a preselected prompt that corresponds to the answer selected. In other words, the digital checklist has branching capability to direct the user to a corresponding prompt/task/question (while skipping any irrelevant prompt/task/question). Thus, in the present example, the digital checklist prompts the user to answer the question "can transmitter be verified to field device?" by selecting "No" or "Yes."

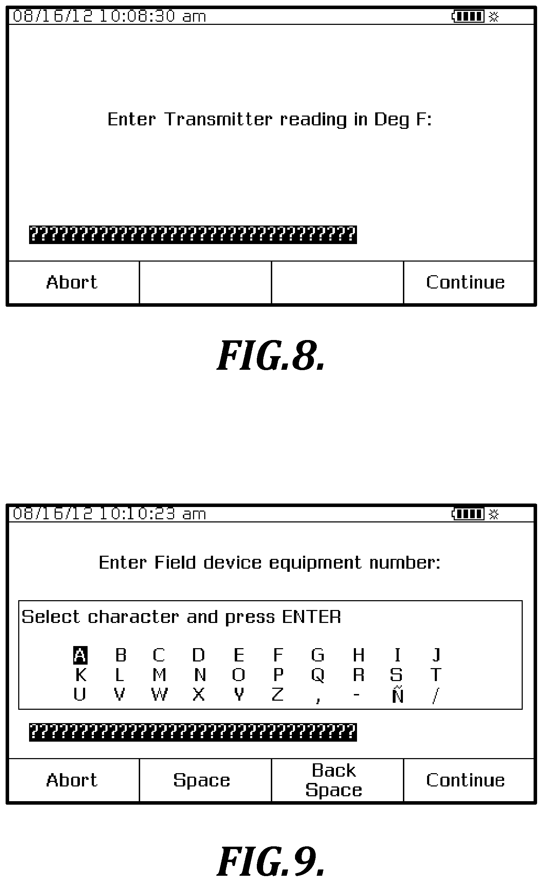

If the user answers "No," the user will be directed to a prompt in another section of the checklist. If the user answers "Yes," the user will be directed to additional prompts in that section. For instance, as shown in FIGURE 8, after answering "Yes," the user is prompted to enter information about the transmitter temperature, and in FIGURE 9, the user is prompted to enter the field device equipment number.

The branching capability of the digital checklist streamlines the checklist process for the user. It also increases the flexibility of the digital checklist, as opposed to a written form which must capture all the possible answers and all the possible follow up questions and tasks.

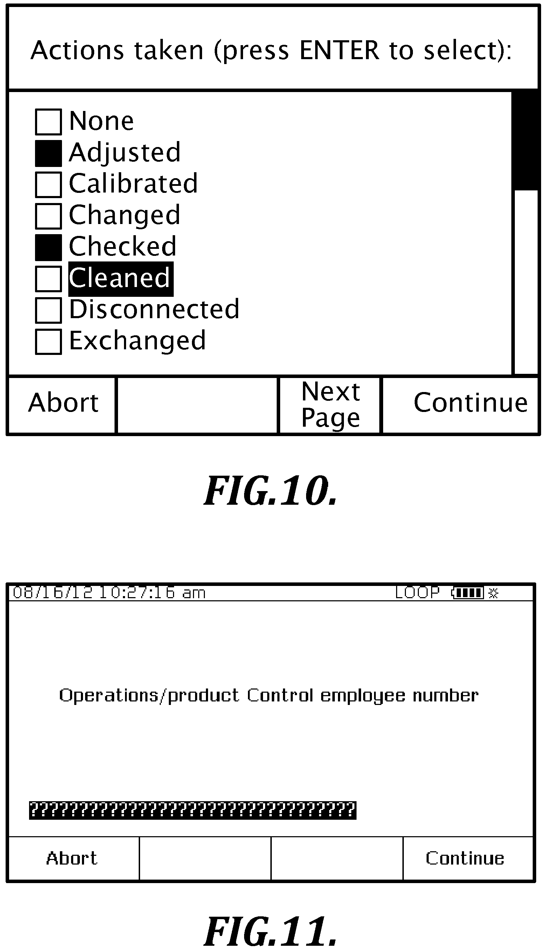

Referring to FIGURE 10, the DPC 12 may prompt the user, after completing one or more tasks, to choose what action or actions have been taken with respect to the equipment. The prompt will request the "actions taken," and provide a multiple choice list of answers for the user to choose from. To choose an answer, the user may scroll through the list (using up/down arrows, a scroll wheel, etc.), and select the desired answer(s) by pressing "Enter" when the answer is highlighted, by physically touching the radio button adjacent the answer (with, for instance, a touchscreen device), or by another suitable method.

Once the user reaches the end of the digital checklist by responding to all the prompts, the user may be required to enter a unique identification code or number to "digitally sign" the checklist, as shown in FIGURE 11. Such a code or number may act as an electronic signature and verification that authorized personnel completed the checklist. Moreover, once the checklist data is archived, the electronic signature may be stored with the checklist for tracking, retrieval, and auditing purposes.

Referring back to FIGURE 3, the digital checklist data, once completed, may be downloaded from the DPC 12 to the site/server workstation 24 in any suitable manner, such as through wired or wireless means. The checklist data may be stored locally on the site/server workstation 24 and/or uploaded onto the host server 20 through the shared files module 62 and/or the Webs server program 50. The database application 54 may include suitable software for archiving, retrieving, and managing checklist data once uploaded to the host server 20.

## Claims

1. A digital checklist system, comprising:
(a) an electronic calibration and measurement device (12);
(b) a computer-readable medium having computer-executable instructions stored thereon that, if executed by one or more processors (34) of a first computing device (20), cause the first computing device (20) to perform actions for managing a digital checklist, the actions comprising:
(i) creating a digital checklist having at least first, second, and third unique prompts;
(ii) selecting the digital checklist for uploading onto the electronic calibration and measurement device (12);
(iii) causing the electronic calibration and measurement device to display the first unique prompt of the digital checklist;
(iv) causing the electronic calibration and measurement device to display one of either the second and third prompts in response to the user's input in response to the first unique prompt; and
(v) downloading data input into the electronic calibration and measurement device (12) in response to the first, second, and third unique prompts; and
(c) a network location (30) for facilitating communication between the electronic calibration and measurement device (12) and the computing device (20).

2. The system of Claim 1, wherein the actions further comprise one or more of:
retrieving a digital checklist from a database (66);
accessing a database (66) to retrieve information about the electronic calibration and measurement device (12);
accessing a database (66) to retrieve a template for creating the digital checklist; and
modifying the digital checklist to include information about the electronic calibration and measurement device (12).

3. The system of Claim 1, wherein the electronic calibration and measurement device (12) includes at least one input mechanism for inputting data in response to the first unique prompt.

4. The system of Claim 3, wherein the actions further comprise storing the downloaded data input into the electronic calibration and measurement device (12) in response to the first unique prompt in a database (66).

5. The system of Claim 1, wherein the digital checklist system further comprises a second computing device (24) communicatively coupled to the first computing device;
wherein the second computing device (24) includes any one or more of:
a web server program (50) for communicating with the first computing device (20); or
a shared files module (62) for communicating with the first computing device (20).

6. A method for implementing a digital checklist on an electronic calibration and measurement device (12), the method comprising:
(a) creating a digital checklist having at least first, second, and third unique prompts;
(b) selecting the digital checklist for uploading onto an electronic calibration and measurement device (12);
(c) displaying the first unique prompt on the electronic calibration and measurement device (12);
(d) receiving data inputted into the electronic calibration and measurement device (12) in response to the first unique prompt;
(e) displaying one of either the second and third prompts in response to the first unique prompt; and
(f) downloading the data from the electronic calibration and measurement device (12).

7. The method of Claim 6, further comprising any one or more of:
retrieving a digital checklist from a database (66);
accessing a database (66) to retrieve information about the electronic calibration and measurement device (12); and
storing the downloaded data input into the electronic calibration and measurement device (12) in response to the first unique prompt in a database (66).

8. The method of Claim 7, further comprising modifying the digital checklist to include information about the electronic calibration and measurement device (12).

9. The method of Claim 6, further comprising accessing a database (66) to retrieve a template for creating the digital checklist.

10. The method of Claim 6, wherein:
the electronic calibration and measurement device (12) is a documenting process calibrator; and/or
the electronic calibration and measurement device (12) includes at least one input mechanism for inputting data in response to the first unique prompt.

11. A computer-readable medium comprising instructions which, when executed by a computer, cause the computer to carry out the method of any of claims 6 to 10.

## Patentansprüche

1. Digitales Checklistensystem, umfassend:
(a) eine elektronische Kalibrierungs- und Messvorrichtung (12);
(b) ein computerlesbares Medium, auf dem durch einen Computer ausführbare Anweisungen gespeichert sind, die, wenn sie durch einen oder mehrere Prozessoren (34) einer ersten Rechenvorrichtung (20) ausgeführt werden, bewirken, dass die erste Rechenvorrichtung (20) Aktionen zur Verwaltung einer digitalen Checkliste ausführt, wobei die Aktionen folgendes umfassen:
(i) Erzeugen einer digitalen Checkliste mit ersten, zweiten und dritten eindeutigen Anforderungen;
(ii) Auswählen der digitalen Checkliste zum Hochladen in die elektronische Kalibrierungs- und Messvorrichtung (12);
(iii) Bewirken, dass die elektronische Kalibrierungs- und Messvorrichtung die erste eindeutige Anforderung der digitalen Checkliste anzeigt;
(iv) Bewirken, dass die elektronische Kalibrierungs- und Messvorrichtung entweder die zweite oder die dritte Anforderung als Reaktion auf die Eingabe des Benutzers als Reaktion auf die erste eindeutige Anforderung anzeigt; und
(v) Herunterladen der in die elektronische Kalibrierungs- und Messvorrichtung (12) eingegebenen Daten als Reaktion auf die ersten, zweiten und dritten eindeutigen Anforderungen; und
(c) eine Netzwerkposition (30) zur Ermöglichung der Kommunikation zwischen der elektronischen Kalibrierungs- und Messvorrichtung (12) und der Rechenvorrichtung (20).

2. System nach Anspruch 1, wobei die Aktionen ferner eines oder mehrere der folgenden umfassen:
Abrufen einer digitalen Checkliste aus einer Datenbank (66);
Zugriff auf eine Datenbank (66), um Informationen über die elektronische Kalibrierungs- und Messvorrichtung (12) abzurufen;
Zugriff auf eine Datenbank (66), um eine Vorlage zur Erzeugung der digitalen Checkliste abzurufen; und
Modifizieren der digitalen Checkliste, so dass diese Informationen über die elektronische Kalibrierungs- und Messvorrichtung (12) enthält.

3. System nach Anspruch 1, wobei die elektronische Kalibrierungs- und Messvorrichtung (12) mindestens einen Eingabemechanismus zur Eingabe von Daten als Reaktion auf die erste eindeutige Anforderung aufweist.

4. System nach Anspruch 3, wobei die Aktionen ferner das Speichern der in die elektronische Kalibrierungs- und Messvorrichtung (12) heruntergeladenen Daten als Reaktion auf die erste eindeutige Anforderung in einer Datenbank (66) umfasst.

5. System nach Anspruch 1, wobei das digitale Checklistensystem ferner eine zweite Rechenvorrichtung (24) umfasst, die kommunikationsfähig mit der ersten Rechenvorrichtung gekoppelt ist;
wobei die zweite Rechenvorrichtung (24) ein beliebiges oder mehrere der folgenden umfasst:
ein Webserverprogramm (50) zur Kommunikation mit der ersten Rechenvorrichtung (20); oder
ein Shared-Files-Modul (62) zur Kommunikation mit der ersten Rechenvorrichtung (20).

6. Verfahren zur Implementierung einer digitalen Checkliste auf einer elektronischen Kalibrierungs- und Messvorrichtung (12), wobei das Verfahren folgendes umfasst:
(a) Erzeugen einer digitalen Checkliste mit ersten, zweiten und dritten eindeutigen Anforderungen;
(b) Auswählen der digitalen Checkliste zum Hochladen in eine elektronische Kalibrierungs- und Messvorrichtung (12);
(c) Anzeigen der ersten eindeutigen Anforderung auf der elektronischen Kalibrierungs- und Messvorrichtung (12);
(d) Empfangen von in die elektronische Kalibrierungs- und Messvorrichtung (12) eingegebener Daten als Reaktion auf die erste eindeutige Anforderung;
(e) Anzeigen einer der zweiten und dritten Anforderungen als Reaktion auf die erste eindeutige Anforderung; und
(f) Herunterladen der Daten von der elektronischen Kalibrierungs- und Messvorrichtung (12).

7. Verfahren nach Anspruch 6, das ferner eines oder mehrere der folgenden umfasst:
Abrufen einer digitalen Checkliste aus einer Datenbank (66);
Zugriff auf eine Datenbank (66), um Informationen über die elektronische Kalibrierungs- und Messvorrichtung (12) abzurufen; und
Speichern der in die elektronische Kalibrierungs- und Messvorrichtung (12) heruntergeladenen Daten als Reaktion auf die erste eindeutige Anforderung in einer Datenbank (66).

8. Verfahren nach Anspruch 7, ferner umfassend das Modifizieren der digitalen Checkliste, so dass diese Informationen über die elektronische Kalibrierungs- und Messvorrichtung (12) enthält.

9. Verfahren nach Anspruch 6, ferner umfassend den Zugriff auf eine Datenbank (66), um eine Vorlage zur Erzeugung der digitalen Checkliste abzurufen.

10. Verfahren nach Anspruch 6, wobei:
die elektronische Kalibrierungs- und Messvorrichtung (12) ein dokumentierender Prozesskalibrator ist; und/oder
die elektronische Kalibrierungs- und Messvorrichtung (12) mindestens einen Eingabemechanismus zur Eingabe von Daten als Reaktion auf die erste eindeutige Anforderung umfasst.

11. Computerlesbares Medium, das Anweisungen umfasst, die, wenn sie durch einen Computer ausgeführt werden, bewirken, dass der Computer das Verfahren nach einem der Ansprüche 6 bis 10 ausführt.

## Revendications

1. Système de liste de contrôle numérique, comprenant :
(a) un dispositif d'étalonnage et de mesure électronique (12) ;
(b) un support lisible par ordinateur sur lequel sont stockées des instructions exécutables par ordinateur qui, si elles sont exécutées par au moins un processeur (34) d'un premier dispositif de calcul (20), amènent le premier dispositif de calcul (20) à effectuer des actions pour gérer une liste de contrôle numérique, les actions comprenant les étapes :
(i) création d'une liste de contrôle numérique ayant au moins une première, une deuxième et une troisième invites uniques ;
(ii) sélection de la liste de contrôle numérique à télécharger sur le dispositif d'étalonnage et de mesure électronique (12) ;
(iii) affichage par le dispositif d'étalonnage et de mesure électronique de la première invite unique de la liste de contrôle numérique ;
(iv) affichage par le dispositif d'étalonnage et de mesure électronique de l'une des deuxième et troisième invites en réponse à la saisie de l'utilisateur en réponse à la première invite unique ; et
(v) téléchargement des données saisies dans le dispositif d'étalonnage et de mesure électronique (12) en réponse aux première, deuxième et troisième invites uniques ; et
(c) un emplacement de réseau (30) pour faciliter la communication entre le dispositif d'étalonnage et de mesure électronique (12) et le dispositif de calcul (20).

2. Système selon la revendication 1, les actions comprenant en outre les étapes :
récupération d'une liste de contrôle numérique d'une base de données (66) ;
accès à une base de données (66) pour récupérer des informations sur le dispositif d'étalonnage et de mesure électronique (12) ;
accès à une base de données (66) pour récupérer un modèle de création de la liste de contrôle numérique ; et/ou
modification de la liste de contrôle numérique pour inclure des informations sur le dispositif d'étalonnage et de mesure électronique (12).

3. Système selon la revendication 1, le dispositif d'étalonnage et de mesure électronique (12) comprenant au moins un mécanisme d'entrée pour entrer des données en réponse à la première invite unique.

4. Système selon la revendication 3, les actions comprenant en outre le stockage des données téléchargées entrées dans le dispositif d'étalonnage et de mesure électronique (12) en réponse à la première invite unique dans une base de données (66).

5. Système selon la revendication 1, le système de liste de contrôle numérique comprenant en outre un second dispositif informatique (24) accouplé de manière communicative au premier dispositif informatique ;
le second dispositif informatique (24) comprenant :
un programme de serveur web (50) pour communiquer avec le premier dispositif informatique (20) ; et/ou
un module de fichiers partagés (62) pour communiquer avec le premier dispositif informatique (20).

6. Procédé pour mettre en œuvre une liste de contrôle numérique sur un dispositif d'étalonnage et de mesure (12), le procédé comprenant les étapes :
(a) création d'une liste de contrôle numérique ayant au moins une première, une deuxième et une troisième invites uniques ;
(b) sélection de la liste de contrôle numérique à télécharger sur le dispositif d'étalonnage et de mesure électronique (12) ;
(c) affichage de la première invite unique sur le dispositif d'étalonnage et de mesure électronique (12) ;
(d) réception des données entrées dans le dispositif d'étalonnage et de mesure électronique (12) en réponse à la première invite unique ;
(e) affichage de la deuxième ou de la troisième invite en réponse à la première invite unique ; et
(f) téléchargement des données à partir du dispositif d'étalonnage et de mesure électronique (12).

7. Procédé selon la revendication 6, comprenant en outre l'étape :
récupération d'une liste de contrôle numérique d'une base de données (66) ;
accès à une base de données (66) pour récupérer des informations sur le dispositif d'étalonnage et de mesure électronique (12) ; et/ou
stockage des données téléchargées dans le dispositif d'étalonnage et de mesure électronique (12) en réponse à la première invite unique dans une base de données (66).

8. Procédé selon la revendication 7, comprenant en outre la modification de la liste de contrôle numérique pour y inclure des informations sur le dispositif d'étalonnage et de mesure électronique (12).

9. Procédé selon la revendication 6, comprenant en outre l'accès à une base de données (66) pour récupérer un modèle pour créer la liste de contrôle numérique.

10. Procédé selon la revendication 6,
le dispositif d'étalonnage et de mesure électronique (12) étant un étalonneur de processus de documentation ; et/ou
le dispositif d'étalonnage et de mesure électronique (12) comprenant au moins un mécanisme d'entrée pour entrer des données en réponse à la première invite unique.

11. Support lisible par ordinateur comprenant des instructions qui, lorsqu'elles sont exécutées par un ordinateur, amènent l'ordinateur à effectuer le procédé selon l'une quelconque des revendications 6 à 10.
